# EUROPEAN PATENT APPLICATION

(11) **EP 1 530 143 A2**
(43) Date of publication of application: **11.05.2005**
(21) Application number: 04104737.4
(22) Date of filing: 28.09.2004
(51) Int. Cl.: G06F 17/60

(54) **Determination of best transportation guidelines**

(30) Priority: 01.10.2003 US 676409
(71) Applicant: SAP Aktiengesellschaft, 69190 Walldorf (DE)
(72) Inventor: Zhang, Lihui, 95070, Saratoga (US); Butzlaff, Christian R. W., 94025, Menlo Park (US)
(74) Representative: Schramm, Michael, Dr.

(57) **Abstract**

Embodiments of the invention include a system to determine the best transportation guidelines for shipping a set of resources from a source location to a target location. The system may include sorting a set of shipping guidelines based on the cost of shipping the set of products. The best transportation guidelines may be selected based on a combination of the best cost and best utilization of transport capacity.

## Description

### BACKGROUND

### Field of the Invention

The invention relates to supply chain management. Specifically, determining a set of locations from which to ship a set of products in transports to fulfill the demand of target locations.

### Background

A supply chain is a network of retailers, distributors, transporters, warehouses, and suppliers that take part in the production, delivery and sale of a product or service. Supply chain management is the process of coordinating the movement of the product or service, information related to the product or service, and money among the constituent parts of a supply chain. Supply chain management also integrates and manages key processes along the supply chain. Supply chain management strategies often involve the use of software in order to project and fulfill demand and improve production levels.

Logistics is a subset of the activities involved in supply chain management. Logistics includes the planning, implementation and control of the movement and storage of goods, services or related information. Logistics aims to create an effective and efficient flow and storage of goods, services and related information from a source to the target location where the product or source is to be shipped in order to meet the demands of a customer.

The movement of goods and services through a supply chain often involves the shipment of the goods and services between the source location at which the product is produced or stored and the target location where the product is to be shipped such as the wholesaler, vendor or retailer. The shipment of products involves a transport such as a truck, ship or airplane and involves the planning of the arrangement of the products to be shipped in the transport. The source location from which a set of products is shipped on a transport is selected based on the availability of the products at the source location. This selection of a source location often leads to inefficient use of transports. Transports may not be completely full increasing the per item shipping cost. Also, the selection of a source location based on availability does not always select the most cost effective source location.

### SUMMARY

Embodiments of the invention include a system to determine the best transportation guidelines for shipping a set of resources from a source location to a target location. The system may include sorting a set of transportation guidelines based on the cost of shipping the set of products. The best transportation guidelines may be selected based on a combination of the best cost and best utilization of transport capacity.

### BRIEF DESCRIPTION OF THE DRAWINGS

Embodiments of the invention are illustrated by way of example and not by way of limitation in the figures of the accompanying drawings in which like references indicate similar elements. It should be noted that different references to "an" or "one" embodiment in this disclosure are not necessarily to the same embodiment, and such references mean at least one.

Figure 1 is a diagram of an order replenishment management system.

Figure 2 is a diagram of a best transportation guideline determination system.

Figure 3 is a diagram of a supply chain between a set of source locations and a target location.

Figure 4 is a flowchart of a best transportation guideline determination system.

### DETAILED DESCRIPTION

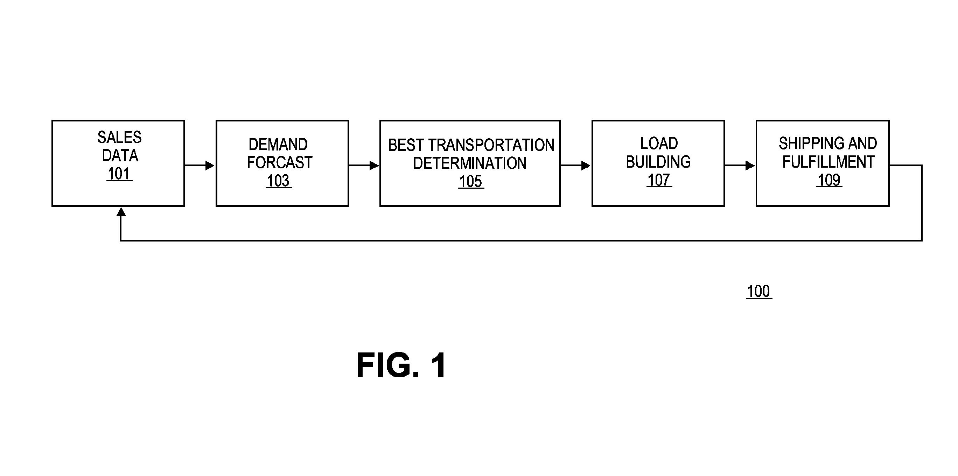

Figure 1 is a diagram of an order replenishment management system. Order replenishment system 100 may be utilized in a supply chain to manage the movement of goods between source locations and target locations. A source location may be any location in a supply chain that may provide a product or similar items. A target location may be any location in a supply chain that may receive a product or similar items. A single location may be both a source and target location dependent upon the context. For example a factory may be a source location that ships products to a warehouse or similar location. The same factory may be a target location for receiving component parts for a product assembled at the factory. Similarly, other location including warehouses, distribution centers, retailers and similar locations may be either a source or target location dependent on the shipping context. The embodiments discussed herein primarily use an example where a factory or warehouse is the source location and the end user or retailer is the target location for sake of clarity. One skilled in the art would understand these are examples of target and source locations for an exemplary context.

In one embodiment, an order replenishment management system 100 may receive demand data including sales and inventory data from retailers, warehouses and similar sources and then generates orders for shipment of products from source locations like factories and distribution centers in order to meet the demand generated by target locations, such as customers or end users. In one embodiment, order replenishment management system 100 receives demand data, such as sales or inventory data from a set of retailers, warehouses and similar target locations (block 101). The demand data may be received at regular intervals (e.g., days, months and similar time intervals).

The demand data that is received from the retailers, warehouses and similar target locations is processed to predict the projected demand for a set of products (block 103). As used herein the term "set" may include any number of items including one item. The projection of demand may be for any time period (e.g., a month, week, day, hour or similar measurement of time). The projected demand may also include a prediction of demand for subdivisions of the time period of the projection. For example, a projection of demand for a month may have a breakdown of that demand on a day by day basis or a week by week basis.

The projected demand data may be used to determine the best manner of transporting a set of products to a target location (block 105). The determination of a best transportation guideline for sending products to the target location may involve the analysis of the availability of demand products at various source locations, the cost of shipping the projected products from the source location to the target destination and the utilization of the capacity of a transport for shipping the products from the source location to the target location.

The determination of the best transportation guidelines relies on a simulation of building a load (e.g., a shipment of products) in a transport or set of transports (block 107). The building of a load may involve an analysis of the size, weight, product types and similar characteristics of a shipment. The simulated loading of the shipment into a transport may be required to meet a set of constraints. For example, the transport may have a weight limit and volume limit, certain products may not be properly shipped in the same transport as other products and similar shipping constraints may be a part of the loading simulation.

After the best transportation guidelines for shipping the products are determined, fulfillment instructions may be sent out to the source location (block 109). The shipping and fulfillment instructions may be sent electronically to the source location. In one embodiment, the loading simulation and best transportation guidelines are determined at a central server node. The shipping and fulfillment instructions may be sent to a remote node at the source location through a network direct link or similar communication system.

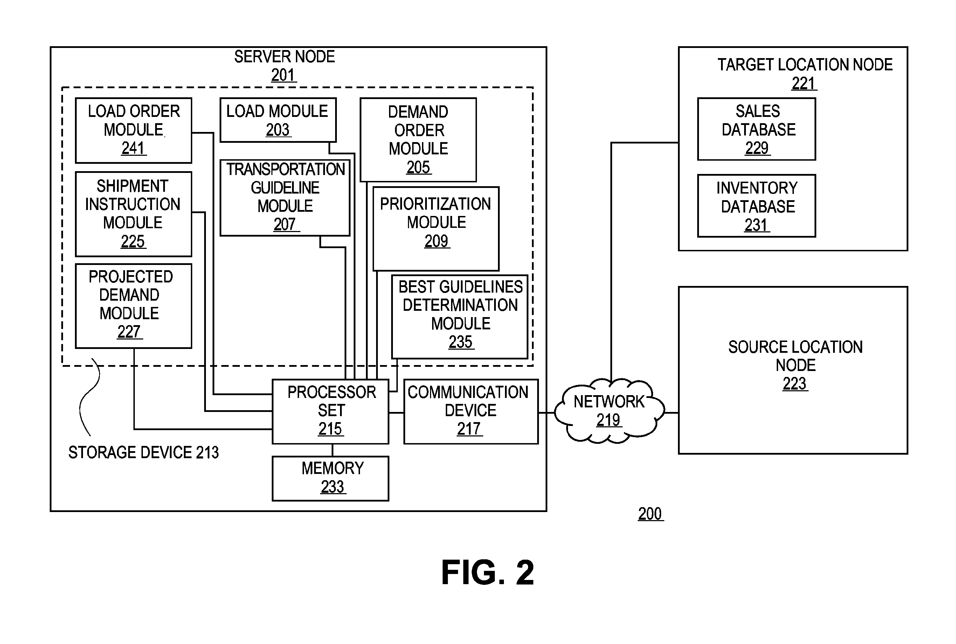

Figure 2 is a diagram of a best transportation guideline determination system. In one embodiment, best transportation guideline determination system 200 may include a server node 201, target location node 221 and source location node 223. Server node 201 may be a single central server, a set of servers sharing the best transportation guideline determination tasks or similar system. The best transportation guideline determination system 200 may include multiple target location nodes or multiple source location nodes. In one embodiment, target location node 221 may include a sales database 229 that tracks the sales of the retailer, vendor or similar target location that may receive products from a source location, such as a manufacturer or distributor of a set of products that are managed by the best transportation guideline determination system 200. In another embodiment, target location node 221 may include an inventory database 231 that tracks the inventory levels of the products supplied by the best transportation guideline determination system 200. Target location node 221 may be in communication with server node 201 through a distributed network 219 or similar communication systems. In one embodiment distributed network 219 may be the Internet.

In one embodiment, server node 201 may include a communication device 217 to receive sales data or inventory data from the target location node 221 through network 219 or similar communications system. Communication device 217 may be modem, network card or similar communications device.

In one embodiment, the incoming demand data, such as sales and/or inventory data may be processed by a demand projection module 227. Demand projection module 227 may utilize the data supplied by target location node 221 to generate a set of demand orders that may be stored in a demand order module 205. In one embodiment, demand order module 205 maybe a data structure that stores and tracks a set of products for which demand has been projected by demand projection module 227. For example, demand projection module 227 may determine that one hundred units of a product should be shipped to a target location (e.g., a retailer, warehouse or similar target location) each week and that fifty of the product units should be shipped on a Monday and ten units should be shipped on Tuesday through Saturday in order to meet the projected demand.

In one embodiment, a best guidelines determination module 235 utilizes a prioritization module 209 to sort a set of transportation guidelines in an transportation guideline module 207. A transportation guideline module 207 is a data structure that includes a set of transportation guidelines. A transportation guideline defines how a given set of products can be shipped from a source location to a target location. A transportation guideline may include limitations on weight, volume, and other similar factors affecting the utilization of transport capacity. These limitations may be connected by Boolean operators to form a complex logical expression which ultimately determines whether the transportation guideline is satisfied or not. Transportation guidelines may also include a set of transportation method constraints (e.g., constraints related to a truck, train, or similar vehicle) and minimum order increment constraints. Prioritization module 209 may sort the transportation guidelines according to the cost of shipping the goods of a demand order from a source location to the target location. Best guideline determination module 235 iteratively analyzes the transportation guidelines including simulating a load of a set of transports based on the transportation guidelines using load simulation module 203.

The best guidelines determination module 235 may select a group of transportation guidelines to utilize based upon the cost of shipping a set of products from a source location to a target location. The cost of shipping may be influenced by the utilization of the capacity of the transports used for shipping (e.g., creating "full" loads for a transport). Maximizing the utilization of the transport can reduce the per item or unit shipping costs. Best guideline determination module 235 attempts to maximize the usage of the capacity of the set of transports. Maximum utilization may be measured in any appropriate manner such as the number of shipping units that a transport may carry, the weight limit a transport may carry, the volume of goods that a transport may carry or by use of similar criteria or the combination of them such as "weight above value X or volume above value Y", as defined by the transportation guideline. Maximum utilization may mean that the carrying capacity of the transport is used to its fullest extent (e.g., it has met its weight limit or its volume limit or shipping unit limit) or falls within an acceptable tolerance range (e.g., ± 1000 pounds of the transports weight limit). This range may be defined to suit the needs of order replenishment system 200 user.

In one embodiment, load simulation module 203 may be an application that simulates the loading of a set of transports with a shipment of products based on a transportation guideline. For example, a load simulation module 203 may be used to determine how the fifty units of the Monday shipment will be loaded onto a set of transports. In one embodiment, load simulation module 203 may work in connection with transportation guideline module 207 when simulating the loading of the set of transports in order to obtain load configurations for the set of transports that meet the criteria of the transportation guideline.

In one embodiment, when the desired load configuration has been determined by the best transportation guideline determination module 203 the results may be sent to a shipment instruction module 225. The shipment instruction module 225 may generate a formatted set of loading configurations or instructions. The shipment instruction module 225 may then output the loading configurations and instructions to source location node 223. The shipment instructions may be sent through a communication device 217 over a network 219 or similar communications system. Source location node 223 may be located at a source location such as a factory, warehouse or similar product source location.

In one embodiment, the modules of the best transportation guideline system may be a set of software instructions, data structures, electronic devices or similar implementations. In one embodiment, the instructions and data structures may be stored on a storage device 213. The instructions may be executed or the data structures loaded by a set of processors 215. The set of processors may utilize a system memory 233.

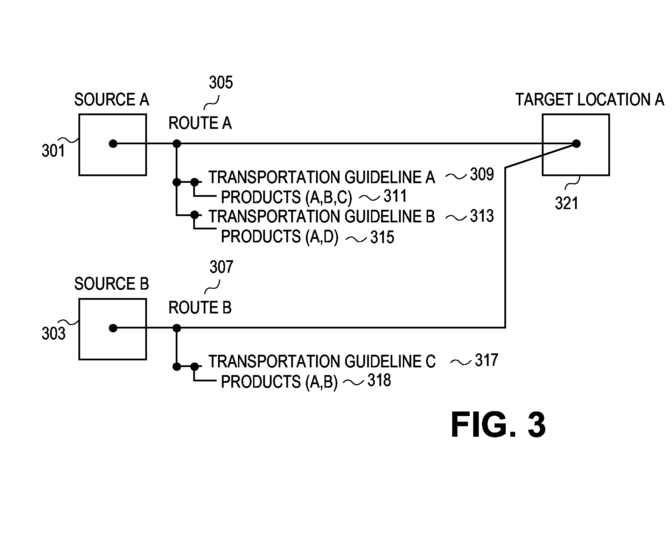

Figure 3 is a diagram of exemplary segment of a supply chain between a set of source locations and a target location. In the exemplary supply chain segment, there are two source locations, source location A 301 and source location B 303. The exemplary supply chain segment has a single target location A 321. A supply chain segment may have any number of source locations connected with any number of target locations. In the exemplary supply chain segment, source location A 301 is connected to target location A 321 by route A 305. Route A is associated with a set of transportation guidelines including transportation guideline A 309 and transportation guideline B 313. These transportation guidelines define the constraints for shipping a set of products from a source location to a target location. In the example, transportation guideline A is applicable to products A, B and C 311 and transportation guideline B is applicable to products A and D 315. The exemplary supply chain segment includes a second source location B 303 having a second route B 307 to the target location A 321. Route B in the exemplary supply chain segment, has a single transportation guideline C 317 associated with it. Transportation guideline C includes constraints for shipping products A and B 318 to target location A 321. Transportation guidelines are used to construct loads in a set of transports. In one embodiment, a single transportation guideline may be used for a transport or set of transports. In one embodiment, multiple transportation guidelines are not applied to a single transport. In one embodiment, transportation guidelines may be used to load a set of transports to meet a set of demand orders.

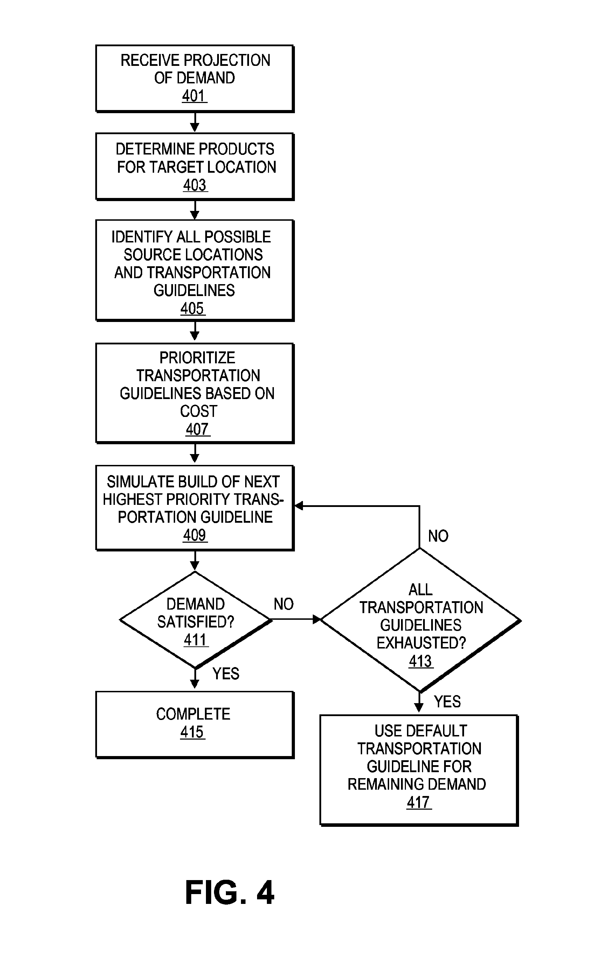

Figure 4 is a flowchart of a best transportation guideline determination system. In one embodiment, demand data is received from a vendor, warehouse or similar target destination and supplied to a demand projection module. The demand projection module 227 projects demand for a future time period (block 401). In one embodiment, the demand projection module 227 relies on prior shipping data, target location inventory data, vendor sales data or similar information sources indicative of past and future demand. Demand projection for a future time period may be for a year, month, week, day, hour or similar measurement of time. The future time period may be subdivided and demand determined for the subdivided period (e.g., a week projection subdivided into a daily demand projection). For example, demand projection module 227 may project a demand for target location A 321 (Figure 3) of seventy five shipping units of product A and twenty five shipping units of product B.

In one embodiment, a set of possible source locations may be selected to service the demand for products related to the target location. All of the products with a projected demand for that target location are then identified (block 403). For example, best guidelines determination module 235, may determine that target location A 321 requires products A and B. In one embodiment, the time period of the demand that is serviced is based on the shipping intervals. For example, if transports travel between a source location and a target location daily then the demand that is determined for the target location may be a daily demand.

In one embodiment, all of the possible source locations that may provide any subset of the set of products for which demand has been predicted for a target location are determined (block 405). This may include identifying all of the transportation guidelines related to the set of products for which demand has been predicted for each route between the source locations and target location. In one embodiment, all non-orderable items (e.g., products that are no longer produced, out of stock at all source locations or similar unavailable products) may be removed from the order demands. In a further embodiment, transportation guidelines that cannot satisfy lead-time or similar criteria for shipping requirements may be removed from consideration. For example, best guideline determination module 235, may determine that target location A 321 may have its demand of products A and B serviced by source location A 301 and source location B 303. The transportation guidelines may then be prioritized based on a cost of shipping from their corresponding source locations to the target location (block 407). For example, if transportation guideline A 309 has an associated cost of $2.50 per shipping unit, transportation guideline B 213 has a cost of $1.50 and transportation guideline C 317 has a cost of $2.25 then the transportation guidelines would be prioritized B, C, then A. In one embodiment, a cost of shipping associated with a transportation guideline may be the cost for shipping a shipping unit of a product from a source location to a target location. This calculation of the cost of shipping may include such costs as transportation costs, storage costs and similar costs. A cost of shipping may include subjective or approximated factors intended to increase or decrease the likelihood of a product being shipped. For example, a cost for an item may include a factor favoring a set of product manufacturers or source locations. In another embodiment, the cost of shipping may be defined by an order replenishment system 100 user to bias the shipping costs using any factor that the user desires.

In one embodiment, the transportation guidelines are each analyzed in order of their priority to determine if they can be used to generate a set of full transports. In one embodiment, the analysis of the transportation guidelines is an iterative process. The highest priority transportation guideline is used to simulate the loading of a set of transports (block 409). For example, according to the prioritization, transportation guideline B 313 with an associated cost of $1.50 would be evaluated first. In one embodiment, the selected transportation guideline is applied to a simulation of the load of a transport. The transportation guideline is applied to load transports until no loads can be configured that meet the constraints of the transportation guideline. The simulation of the loading may also be carried out to minimize the cost of transportation per product or shipping unit. The simulation of the loading may also be carried out to maximize the usage of the capacity of the transports. For example, transportation guidelines B 313 may be applied to satisfy the demand for seventy five shipping units of product A by loading the shipping units into a transport. However, if a transport holds more than seventy five shipping units then the transport would not have its maximum capacity utilized. After the transportation guideline has been exhausted, a check is made to determine if the demand has been satisfied (block 411). The demand is satisfied when all products for which a demand has been predicted for the current time period have been loaded into a set of transports. For example seventy five units of product A does not satisfy the demand for product B of which no shipping units have been loaded. In one embodiment, the best guidelines determination module 235 configures the transports to be fully loaded transports. If the demand has been satisfied then the process is complete (block 415) and instructions may be sent to the source location(s) for loading the set of transports.

In one embodiment, if the demand is not satisfied after a transportation guideline has been exhausted then a check may be made if all of the transportation guidelines have been exhausted (block 413). If all of the transportation guidelines have not been exhausted the next highest priority transportation guideline may be selected and simulated (block 409). For example, best guidelines determination module 235 may next simulate transportation guidelines C 317 and A 309. In the example, if a transport can hold 100 shipping units of A or B interchangeably then transportation guideline C 317 would be successfully used to fully load a transport with seventy five units of product A and twenty five shipping units of product B.

If all of the transportation guidelines have been exhausted then a default transportation guideline may be utilized to handle the remaining product demand (block 417). In one embodiment, there is a default transportation guideline for each product, group of related products or similar set of the demand products. A default transportation guideline may include a set of shipping rules to apply to a set of products. The shipping rules for the default transportation guidelines may have a reduced set of constraints or provide set configurations that are acceptable for shipping a single product or set of products. The default guidelines may be applied to partial loads of a transport. For example, a default or set of default guidelines may be applied to load the remainder of a set of shipping units onto a final transport after all other guidelines have been applied, but demand has not been satisfied for at least one product. If the remaining product demand is not enough to make a full transport load based on a default guideline, product demand in the future can be pulled in to make up for the difference. After the set of transportation guidelines has been finalized, a set of load orders for configuring the load for the set of transports may then be sent to the source location.

] In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. An apparatus comprising:
a demand order module including a set of products to be shipped to a target location;
a transportation guideline module including a set of constraints for a shipment from one of a set of a source locations to the target location;
a route determination module to select the set of source locations having the set of products based on a cost factor and a utilization of a capacity of a set of transports; and
a processing device to execute the route determination module.

2. The apparatus of claim 1, further comprising a storage device to store at least one of the demand order module, transportation guideline module, and the route determination module.

3. The apparatus of claim 1, further comprising a loading module to simulate a loading of the shipment of the set of products into the set of transports.

4. A method comprising:
identifying a set of source locations having a set of desired resources for a target location;
prioritizing a set of shipping rule groups based on a cost factor associated with the set of source locations and the target location; and
selecting a subset of the set of source locations and a subset of the shipping rule groups based on the cost factor and a utilization of a capacity of a set of transports.

5. The method of claim 4, wherein selecting comprises searching iteratively through the set of shipping rule groups in order of priority for a shipping solution.

6. The method of claim 4, wherein selecting comprises simulating iteratively the fulfillment of each group of the set of shipping rules in priority order until the set of desired resources is loaded into the set of transportation units.

7. The method of claim 4, wherein the set of shipping rule groups includes a default group of shipping rules.

8. The method of claim 4, wherein the utilization of the capacity of the set of transports is a maximum utilization.

9. The method of claim 4, further comprising altering a size of a shipment to utilize a maximum capacity of the set of transports.

10. An apparatus comprising:
a means for determining a set of source locations of a set of resources;
a means for ordering a set of shipping rule groups based on a cost of shipping to a target location from the set of source locations; and
a means for selecting a subset of shipping rule groups based on the cost of shipping the set of resources from a subset of the set of source locations to the target location and utilization of a set of transports.

11. The apparatus of claim 10, further comprising a means for simulating the loading of the set of transports.

12. The apparatus of claim 10, wherein the set of shipping rule groups includes a default shipping rule group.

13. The apparatus of claim 10, further comprising a means for determining all source locations having the set of resources.

14. A machine readable medium containing therein a set of instructions which when executed cause a machine to perform a set of operations comprising:
identifying a set of source locations having a set of products for a target location;
prioritizing a set of transportation guidelines based on a cost factor for shipping the set of products from the set of source locations to the target location; and
determining a subset of transportation guidelines based on the cost factor and utilization of a capacity of a set of transports.

15. The machine readable medium of claim 14, having further instructions stored therein, which when executed cause a machine to perform a set of operations, further comprising searching iteratively through the set of transportation guidelines in order of priority for a shipping solution.

16. The machine readable medium of claim 14, wherein the set of transportation guidelines includes a default transportation guideline.

17. The machine readable medium of claim 14, wherein determining comprises simulating iteratively the fulfillment of each transportation guideline from the set of transportation guidelines in priority order until the set of resources is loaded into the set of transports.

18. The machine readable medium of claim 16, wherein no product of the set of products is associated with more than one default transportation guideline.

19. The machine medium of claim 14, having further instructions stored therein, which when executed cause a machine to perform a set of operations, further comprising altering a size of a shipment to utilize a maximum capacity of the set of transports.
